(19) Europäisches Patentamt
European Patent Office
Office européen des brevets

(11) **EP 2 307 943 B1**

(12) **FASCICULE DE BREVET EUROPEEN**

(45) Date de publication et mention
de la délivrance du brevet:
**19.10.2016 Bulletin 2016/42**

(21) Numéro de dépôt: **09769347.7**

(22) Date de dépôt: **26.06.2009**

(51) Int Cl.:
***G06F 3/0346*** *(2013.01)*     ***G01C 21/16*** *(2006.01)*

(86) Numéro de dépôt international:
**PCT/EP2009/058024**

(87) Numéro de publication internationale:
**WO 2009/156499 (30.12.2009 Gazette 2009/53)**

(54) **POINTEUR A CAPTURE DE MOUVEMENT RESOLUE PAR FUSION DE DONNEES**

ZEIGER MIT DURCH DATENZUSAMMENFÜHRUNG AUFGELÖSTER BEWEGUNGSERFASSUNG

POINTER WITH MOTION SENSING RESOLVED BY DATA MERGING

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **27.06.2008 FR 0803632**

(43) Date de publication de la demande:
**13.04.2011 Bulletin 2011/15**

(73) Titulaires:
• **Movea S.A**
**38040 Grenoble Cedex 9 (FR)**
• **Commissariat à l'Énergie Atomique
et aux Énergies Alternatives
75015 Paris (FR)**

(72) Inventeurs:
• **BASSOMPIERE, Cindy**
**F-38000 Grenoble (FR)**
• **CARITU, Yanis**
**F-38134 Saint Joseph La Riviere (FR)**
• **FLAMENT, Bruno**
**F-38134 Saint Julien De Ratz (FR)**
• **VASSILEV, Andrea**
**F-38000 Grenoble (FR)**

(74) Mandataire: **Nguyen Van Yen, Christian
Marks & Clerk France
Conseils en Propriété Industrielle
Immeuble Visium
22, Avenue Aristide Briand
94117 Arcueil Cedex (FR)**

(56) Documents cités:
**EP-A- 1 441 279        EP-A- 1 870 670
US-A1- 2005 240 347     US-A1- 2007 257 885**

• **WELCH G ET AL: "An introduction to the Kalman filter" COMPUTER GRAPHICS. SIGGRAPH 2001. CONFERENCE PROCEEDINGS. LOS ANGELES, CA, AUG. 12 - 17, 2001; [COMPUTER GRAPHICS PROCEEDINGS. SIGGRAPH], NEW YORK, NY : ACM, US, 12 août 2001 (2001-08-12), pages 1-49, XP002318767 ISBN: 978-1-58113-374-5 cité dans la demande**

EP 2 307 943 B1

**Description**

L'invention concerne l'utilisation d'un objet instrumenté par des capteurs de mouvement utilisé pour convertir des mouvements d'un utilisateur porteur de l'objet en mouvements d'un point dans un plan. Ces objets peuvent être ainsi désignés génériquement par le terme « pointeurs ». L'utilisateur tient normalement le pointeur dans sa main, bien que l'on puisse facilement envisager d'autres modalités de portage selon les applications telles que la fixation sur la tête ou un des membres du porteur. Ils peuvent avoir des fonctions diverses, notamment : télécommande d'un appareil audiovisuel (télévision, lecteur/enregistreur de disques, chaîne hi-fi), où le point est un programme ou une fonction à choisir dans un menu ; télécommande d'un appareil ménager où le pointeur désigne l'appareil et lui fait exécuter une fonction ; télécommande d'ordinateur où le pointeur est programmé selon les applications exécutées par l'ordinateur ; interface de jeux électroniques où, selon le jeu, le pointeur peut être un objet manipulé par l'utilisateur (club de golf, raquette de tennis, boule de bowling, arme de point, de hanche ou d'épaule, etc...) ; assistance pour l'interface homme-machine ou la télécommande à destination des personnes à mobilité réduite (fixation d'un pointeur par exemple sur la tête, les lunettes, une oreillette, ou tout autre partie liée aux mouvements de la tête, pour aider les personnes en déficience motrice ou inaptes à utiliser une souris classique à la main, à diriger un pointeur à l'écran. En général, le pointeur est doté de boutons permettant de sélectionner une commande dont la programmation permet d'exécuter une fonction (ou un service) ou d'associer un état du pointeur différent pendant le geste de pointage (trajectoire avec bouton appuyé *vs* trajectoire avec bouton relâché, ce qui permet par exemple de prendre comme information non pas la situation d'un point sur l'écran mais une trajectoire de curseur qu'on peut elle-même associer à une action, etc...). Les mouvements du pointeur dans l'espace comportent des rotations et des translations. Ils peuvent être mesurés par des capteurs de différents types : des capteurs d'image permettent de mesurer à la fois les rotations et les translations par comparaison d'images successives et transformations géométriques; un magnétomètre, un accéléromètre ou un gyromètre uni-axe peuvent mesurer une rotation autour dudit axe ; une combinaison de magnétomètres, accéléromètre et/ou de gyromètres peut mesurer des translations et des rotations autour de plusieurs axes ; une combinaison de capteurs des types précédents permet d'améliorer la précision des mesures, la redondance permettant de déterminer des intervalles de confiance; la combinaison peut comprendre une ou plusieurs caméras et plusieurs capteurs magnétométriques, accélérométriques et/ou gyrométriques. Un autre capteur de rotation, insensible aux accélérations, peut être un capteur de luminosité. Si c'est une cellule photoélectrique, il est connu que la quantité de lumière reçue par la dite cellule est proportionnelle à sa surface de réception de la lumière et au cosinus de l'angle d'inclinaison des rayons avec sa normale. La source lumineuse peut être le soleil, ou une autre source quasi-ponctuelle, type ampoule, située suffisamment loin pour que ses rayons d'émission soient considérés parallèles entre eux sur tout le volume de l'expérience gestuelle. Pour éviter les problèmes de luminosité ambiante changeante, on peut avantageusement utiliser un capteur type « oeil de mouche » multi-facette, la direction angulaire de réception étant la facette qui mesure le flux lumineux le plus élevé.

Le problème général que ces applications des pointeurs à capture de mouvement doivent résoudre est de tenir compte de la manière dont l'utilisateur tient le pointeur, en particulier de son orientation dans l'espace. En effet, si le pointeur est tenu par exemple à 45° au lieu d'être tenu à l'horizontale, un mouvement horizontal ou vertical du pointeur se traduira sur l'écran sur lequel il pointe par un mouvement diagonal. Ce phénomène est connu sous le nom de « tilt » ou torsion. Il y a donc lieu de le corriger pour que le pointeur soit utilisable.

Une première méthode pour résoudre ce problème est de prévoir des moyens mécaniques pour que les capteurs restent en position sensiblement fixe dans le référentiel de l'écran lorsque l'utilisateur imprime un mouvement de torsion au pointeur. Il est ainsi possible de prévoir que le ou les capteurs sont mobiles au sein du pointeur à la manière d'un pendule dont la base a une inertie suffisante pour rester sensiblement fixe en dépit des mouvements de torsion imprimés au pointeur. Un tel dispositif est divulgué par le brevet US 5,453,758. Il est également possible d'encapsuler lesdits capteurs dans un dispositif de stabilisation constitué par un couple de sphères liées au pointeur par des axes de rotation, comme c'est le cas dans un compas embarqué sur un bateau ou un aéronef. Un tel dispositif est divulgué par le brevet US 5,440,326. Un premier inconvénient de ces dispositifs mécaniques de compensation de la torsion du pointeur est qu'ils sont limités à des plages d'angles de torsion et de vitesse de déplacement réduites. Un deuxième inconvénient est que ces dispositifs sont volumineux.. Un troisième inconvénient réside dans l'inertie mécanique de ces dispositifs et le retard à l'alignement horizontal induit, ce qui les proscrit des applications temps réel de pointage.

Une deuxième méthode pour compenser cette torsion du pointeur consiste à calculer les angles de torsion en utilisant les mesures de certains des capteurs embarqués dans le pointeur, notamment des accéléromètres, et d'effectuer ensuite une transformation des mesures des autres capteurs du référentiel du pointeur dans celui de l'écran en appliquant auxdites mesures une ou plusieurs matrices de rotation dont les coefficients sont fonction du ou des angles de torsion. De telles méthodes sont divulguées notamment par le brevet US 5,902,968 où le capteur principal est un gyromètre et le capteur de calcul des angles de torsion est un accéléromètre, la demande US 2004/0075650 où le capteur principal est une caméra couplée à des accéléromètres, la combinaison permettant la correction de tilt, la demande US 2002/0140745 où le capteur principal est un récepteur GPS et le capteur de correction de tilt un ensemble d'accéléromètres et le brevet US 7,158,118 où le capteur principal est constitué par un ou plusieurs gyromètres et le capteur de correction de tilt est constitué par un ou plusieurs accéléromètres. Cette méthode présente l'inconvénient de fournir des résultats bruités dans la mesure où les angles de torsion sont calculés avec les mesures d'une partie des capteurs seulement.

Les demandes de brevet européen EP1870670 et EP1441279 divulguent, dans des contextes applicatifs différents, des dispositifs de capture de mouvement utilisant des capteurs inertiels de type gyrométrique et accélérométrique dont les mesures sont fusionnées par un filtre de Kalman en vue de fournir les angles d'Euler et la position du dispositif dans l'espace. Cependant le document EP1441279 ne divulgue pas de méthode fixant un lien entre le mouvement du pointeur ainsi estimé et le déplacement d'un curseur à l'écran. Les documents cités n'introduisent pas comme dans le procédé de l'invention de repère porteur. Ainsi ils ne traitent pas du problème particulier de compensation des mouvements de torsions que l'utilisateur applique naturellement au pointeur et qui, pour un lien spécifique entre les angles ou vitesses angulaire du pointeur et le déplacement du curseur à l'écran, provoquent un déplacement contre-intuitif du curseur à l'écran. Ainsi ces documents n'enseignent pas de dispositif ou méthode permettant de compenser l'angle de torsion d'un pointeur. Ainsi, la demande de brevet européen EP1870670 ne divulgue pas d'algorithme de fusion de donées comportant un couplage de mesures gyrométriques et accélérométriques et la demande de brevet européen EP1441279 ne divulgue pas un vecteur d'état comprenant des variables représentatives des angles de torsion.

La demande US 2007/0257885A1 divulgue un dispositif de pointage comprenant un accéléromètre trois axes et deux gyromètres et utilisant une méthode pour compenser l'angle de roulis comportant un filtre de Kalman pour corriger un déport dynamique de rotation.

La présente invention résout les problèmes non résolus par l'art antérieur en procurant un dispositif compact et apte à compenser l'orientation donnée au pointeur dans une plage de fonctionnement large. Pour ce faire, le dispositif comprend un module de calcul pour mettre en oeuvre plusieurs méthodes différentes de résolution par fusion de données, spécifiées dans les revendications annexes.

Un autre avantage de l'invention est qu'elle permet de compenser les angles de roulis et de tangage, et non pas seulement le premier comme c'est le cas dans la plupart des documents de l'art antérieur. En outre, la présente invention est compatible de plusieurs types de capteurs dont la configuration peut être choisie notamment en fonction du coût objectif de l'application et des performances spécifiées. Un avantage supplémentaire est que les paramètres de l'algorithme de la compensation du tilt peuvent être également ajustés en fonction dudit coût objectif et desdites performances spécifiées.

L'invention sera mieux comprise, ses différentes caractéristiques et avantages ressortiront de la description qui suit de plusieurs exemples de réalisation et de ses figures annexées dont :

- La figure 1 représente de manière simplifiée l'architecture matérielle d'un pointeur selon un mode de réalisation de l'invention ;
- La figure 2 illustre la définition des différents repères dans lesquels sont calculés les mouvements d'un pointeur et d'un curseur sur un écran dans un mode de réalisation de l'invention ;
- La figure 3 illustre les relations de passage entre les différents repères de la figure 2 ;
- La figure 4 explicite les coordonnées et les angles de roulis et de tangage utilisés dans la description de la présente invention ;
- La figure 5 représente un dispositif de pointage dans un mode de réalisation comprenant un gyromètre trois axes ;
- La figure 6 est un organigramme des traitements dans plusieurs modes de réalisation de l'invention.

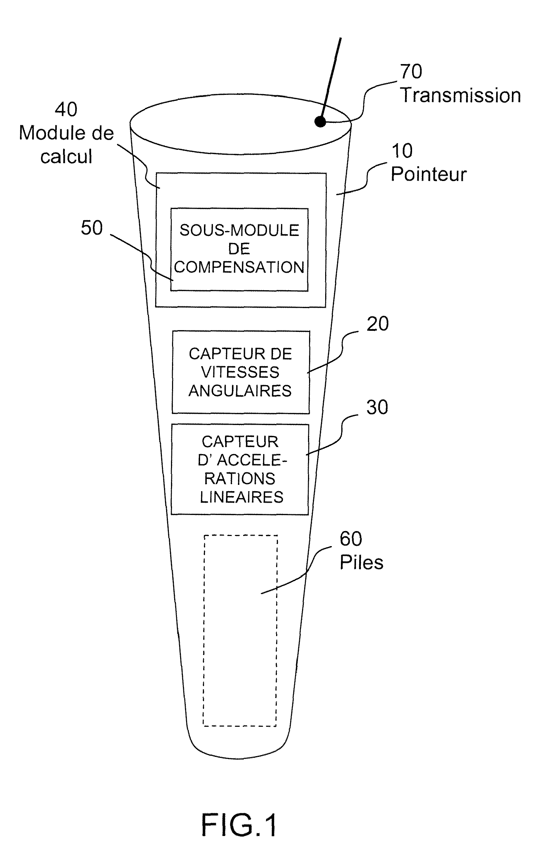

La figure 1 représente de manière simplifiée l'architecture matérielle d'un pointeur selon un mode de réalisation de l'invention. Le dispositif de pointage 10 ou pointeur a avantageusement la forme et l'aspect d'une télécommande de télévision, c'est-à-dire qu'il est de forme allongée, apte à être tenu dans la main de l'utilisateur. Alternativement, il peut d'ailleurs être fixé sur un des membres de l'utilisateur, notamment dans les applications de jeux. Le pointeur est associé à un élément mobile susceptible de se déplacer dans une surface plane, par exemple un écran ou une surface d'écriture. Les mouvements de cet élément mobile sont contrôlés par les mouvements du pointeur. Le pointeur est avantageusement pourvu de boutons sur plusieurs de ses faces pour commander les fonctions auxquelles la télécommande permet d'accéder. Le pointeur comprend une alimentation 60 et un canal de transmission 70 à l'objet à commander. La transmission par voie radiofréquence peut s'opérer avec une forme d'onde et un protocole Bluetooth ou avec une forme d'onde et un protocole Wi-Fi (Norme 802.11 g).

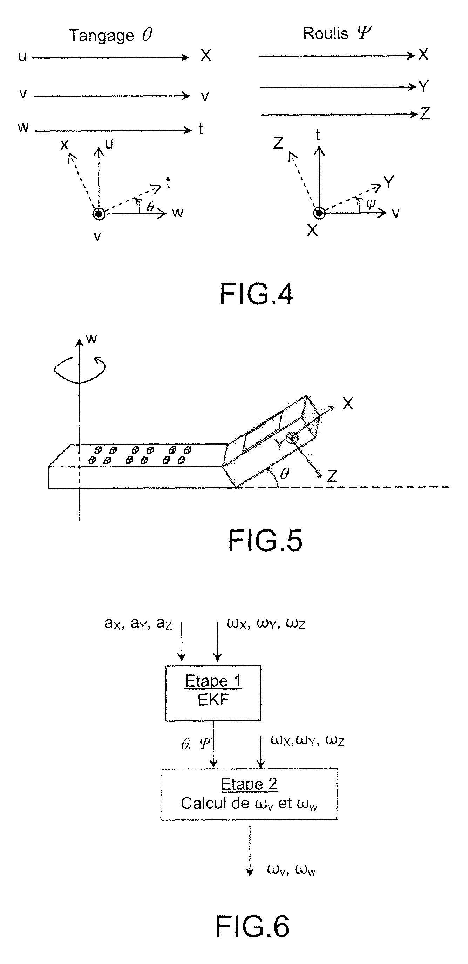

La transmission peut s'effectuer par voie infra-rouge ou par voie radiofréquence. Les signaux transmis sont les commandes correspondant d'une part à l'enfoncement d'un des boutons présents sur le corps du pointeur, qui déclenche l'exécution d'une fonction et d'autre part à la capture du mouvement du pointeur pour commander les mouvements d'un curseur sur l'écran de contrôle de l'objet à commander. Ces signaux de commande sont générés par le module de calcul 40 qui comprend un sous-module de compensation 50 de la torsion imprimée au pointeur par l'utilisateur. Ce module de calcul comprend un microprocesseur, par exemple un DSP Texas Instruments TMS320VC5509 pour les applications les plus exigeantes en temps de calcul, ou un microcontrôleur 32 bits à coeur ARM, par exemple un de ceux de la famille STR9, notamment le STR9F12FAW32 de STM. Le module de calcul comprend également de préférence une mémoire flash nécessaire au stockage du code à exécuter et des données permanentes qui lui sont nécessaires et une mémoire dynamique de travail. Le module de calcul reçoit en entrée les sorties de deux types de capteurs. D'une part, des capteurs de vitesses angulaires 20 ont pour fonction de mesurer les rotations du pointeur selon deux ou trois axes. Ces capteurs seront préférentiellement des gyromètres. Il peut s'agir d'un gyromètre deux axes ou d'un gyromètre trois axes. Les mérites respectifs de ces deux modes de réalisation sont discutés plus loin dans la description en liaison avec les commentaires relatifs à la figure 5. On peut par exemple utiliser les gyromètres fournis par Analog Devices de référence ADXRS300. Mais tout capteur capable de mesurer des vitesses angulaires est utilisable. On peut en particulier envisager une caméra dont le traitement d'image compare des images successives pour en déduire les déplacements qui sont des combinaisons de translations et de rotations. Il faut cependant alors disposer d'une capacité de calcul sensiblement supérieure à celle dont a besoin un gyromètre. On peut également utiliser des magnétomètres dont la mesure du déplacement par rapport au champ magnétique terrestre permet de mesurer les rotations par rapport au référentiel de ce champ, on peut par exemple utiliser les magnétomètres de référence HMC1001 ou HMC1052 de la société Honeywell ou KMZ41 de la société NXP. Quels que soient les capteurs utilisés, leurs mesures sont lues dans le référentiel du pointeur. Si ce référentiel n'est pas identique à une translation de position près au référentiel de l'utilisateur et au référentiel du pointeur, les mesures sont affectées d'un biais qui va entraîner des déplacements incohérents de l'élément mobile. C'est pourquoi il est prévu au sein du module de calcul 40 un sous-module de compensation 50 dont la fonction est de calculer les déplacements de l'élément mobile dans la surface plane en fonction des déplacements du membre de l'utilisateur qui tient le pointeur, ladite fonction étant corrigée de l'impact de la torsion imprimée au pointeur par l'utilisateur. Le sous-module de compensation récupère en entrée les sorties d'un deuxième capteur 30 qui mesure les accélérations linéaires du pointeur $a_x$, $a_y$, $a_z$. Préférentiellement, le capteur 30 est un accéléromètre trois axes. Avantageusement, les capteurs 20 et 30 sont réalisés tous deux en technologie MEMS (Micro Electro Mechanical Systems), éventuellement au sein d'un même circuit (par exemple accéléromètre de référence ADXL103 d'Analog Devices, LIS302DL de Thomson, gyromètre de référence MLX90609 de Melixis, ADXRS300 d'Analog Devices). Le cas échéant, le module MEMS sera situé près du centre de gravité du dispositif de pointage, sauf si un mode particulier de réalisation, tel que celui illustré par la figure 5, justifie un positionnement différent. On notera cependant qu'une caméra assortie d'un dispositif de traitement d'images peut également remplacer les deux capteurs 20 et 30, les vitesses angulaires et accélérations linéaires de déplacement du pointeur pouvant être déduites d'une corrélation d'images successives.

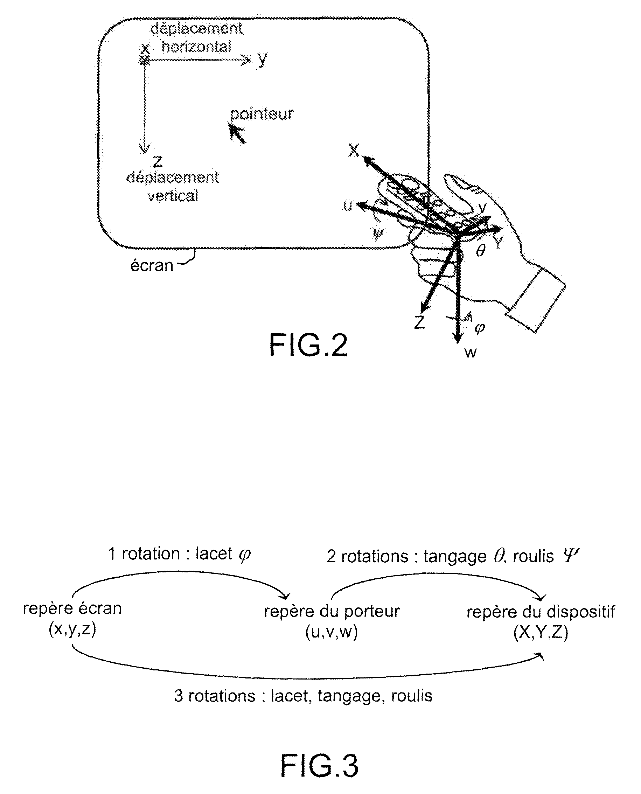

La figure 2 illustre les transformations de repères permettant de s'affranchir de ladite torsion.

Nous définissons par le terme repère écran le repère orthonormé lié à l'écran (*xyz*), l'axe *z* étant dirigé vers le bas. Le déplacement de l'élément mobile est défini dans ce repère suivant les axes *y* et *z*. Un second repère correspond au repère du dispositif (*XYZ*), *X* étant dans la direction principale de pointage, *Y* vers la droite et *Z* vers le bas du dispositif. Le dernier repère (*uvw*), nommé repère du porteur, est associé à la partie du corps qui crée le mouvement de pointage. Ce repère est défini en ramenant le repère (*XYZ*) dans le plan horizontal. Le passage du repère du porteur au repère du dispositif s'effectue donc par deux rotations successives (tangage $\theta$ ou « pitch » en anglais, roulis $\psi$ ou « roll » en anglais). Par ailleurs, le porteur n'étant pas nécessairement placé face à l'écran, le passage de ce repère au repère écran (*xyz*) s'effectue par une rotation (lacet $\varphi$ ou « yaw » en anglais).

La figure 3 illustre les relations de passage entre les différents repères de la figure 2. Nous cherchons ici à traduire un mouvement horizontal du porteur (avec rotation) par un déplacement horizontal de l'élément mobile et un mouvement vertical du porteur (avec rotation) par un déplacement vertical de l'élément mobile. De manière intuitive, nous voyons que même si l'utilisateur ne se trouve pas face à l'écran (angle de lacet non nul), le résultat ne sera pas modifié puisque les mouvements se feront toujours de manière horizontale et verticale. Par conséquent, les rotations doivent être mesurées dans le repère du porteur et non dans le repère écran. L'angle de lacet, traduisant la rotation du repère écran au repère du porteur, n'intervient donc pas dans notre problème.

Un déplacement horizontal de l'élément mobile est donc défini par une rotation autour de l'axe *w*, mesurée par $\omega_w$, et un déplacement vertical par une rotation autour de l'axe *v*, mesurée par $\omega_v$.

Nous définissons la position standard du dispositif comme étant la position dans laquelle les repères (*uvw*) et (*XYZ*) sont alignés, i.e. les angles de tangage et roulis sont nuls. Le dispositif se situe alors dans un plan horizontal, tourné par rapport au repère écran d'un angle de lacet.

Lorsque le dispositif se trouve dans cette position, les vitesses angulaires mesurées par les deux axes gyromètres ($\omega_Y$ et $\omega_Z$) sont égales à $\omega_v$ et $\omega_w$, respectivement. Ces deux valeurs donnent une information directe sur les déplacements horizontaux (rotation autour de l'axe w représentée par $\omega_w$) et verticaux (rotation autour de l'axe v représentée par $\omega_v$) et donc le déplacement de l'élément mobile sur l'écran (*dy et $d_z$*), ceci quelque soit l'angle de lacet.

En revanche, lorsque le dispositif ne se trouve plus dans une position standard (angles de roulis et/ou tangage non nuls donc repères *(uvw)* et (*XYZ*) non alignés) et que le porteur réalise des déplacements verticaux et horizontaux (rotations autour des axes *v* et *w*), les mesures $\omega_Y$ et $\omega_Z$ sont différentes de $\omega_v$ et $\omega_w$. Il n'est donc pas possible de les associer directement au déplacement de l'élément mobile à l'écran. Il est alors nécessaire de connaître l'orientation du repère du dispositif par rapport au repère du porteur (plan horizontal), donc les angles de tangage et roulis, afin de rapporter les mesures gyrométriques, $\omega_Y$ et $\omega_Z$, dans le repère du porteur (uvw) et en déduire les déplacements $d_y$ et $d_z$.

Le dispositif de l'invention permet de déterminer les vitesses angulaires $\omega_v$ et $\omega_w$, en prenant en compte d'éventuels angles de tangage et de roulis.

La figure 4 explicite les coordonnées et les angles de roulis et de tangage utilisés dans la description de la présente invention. La matrice de rotation R exprimant la rotation pour passer du repère (uvw) au repère (XYZ) est :

$$R = \begin{pmatrix} \cos\theta & 0 & -\sin\theta \\ \sin\theta.\sin\psi & \cos\psi & \cos\theta.\sin\psi \\ \sin\theta.\cos\psi & -\sin\psi & \cos\theta.\cos\psi \end{pmatrix} \qquad \text{Eq. 1}$$

Les capteurs accélérométriques et gyrométriques renvoient respectivement les mesures notées $(a_X, a_Y, a_Z)$ et $(\omega_Y, \omega_Z)$ dans le repère (XYZ) du dispositif de pointage. Le problème à résoudre est donc d'exprimer ces mesures dans le repère (uvw) :

$$\begin{cases} \omega_X = \cos\theta.\omega_u - \sin\theta.\omega_w \\ \omega_Y = \sin\theta.\sin\psi.\omega_u + \cos\psi.\omega_v + \cos\theta.\sin\psi.\omega_w \\ \omega_Z = \sin\theta.\cos\psi.\omega_u - \sin\psi.\omega_v + \cos\theta.\cos\psi.\omega_w \\ a_X = -\sin\theta \\ a_Y = \cos\theta.\sin\psi \\ a_Z = \cos\theta.\cos\psi \end{cases} \qquad \text{Eq. 2}$$

Les solutions proposées dans l'art antérieur pour opérer ce changement de repère, notamment celles divulguées par le brevet US7158118 qui emploie des micro-accéléromètres et micro-gyromètres MEMS, sont caractérisées par deux points principaux :

- une compensation de l'angle de roulis du dispositif par rapport au porteur afin de supprimer son influence sur le déplacement de l'élément mobile à l'écran ; celle-ci s'effectue généralement grâce aux mesures accélérométriques ; en revanche, bien que l'angle de tangage entraîne des perturbations similaires à l'angle de roulis, il n'est pas compensé ;
- une résolution analytique des équations de changement de repère ; toutefois, dans ce cas, les mesures capteurs sont utilisées sans aucun traitement préalable et l'angle de roulis n'est déterminé qu'à partir des mesures accélérométriques ; le déplacement du curseur à l'écran peut donc être altéré lorsque des perturbations vibratoires sont présentes (environnement, tremblements de la main de faible amplitude équivalents à un bruit de mesure augmenté, capteur défaillant) ou lorsque des mouvements brusques sont réalisés. En effet, ces phénomènes sont directement mesurés par les accéléromètres mais ne sont pas pour autant corrigés par les équations analytiques, d'où une dégradation du résultat. Cette mise en oeuvre est donc peu robuste.

Dans un mode privilégié de réalisation de l'invention, l'estimation des angles de roulis et de tangage est simultanée et se fait par une méthode de fusion de données, ce qui permet d'améliorer la robustesse du déplacement de l'élément mobile à l'écran vis-à-vis de l'orientation du dispositif par rapport au porteur. Deux classes de méthodes de résolution sont utilisables : les méthodes faisant appel aux observateurs ; celles utilisant un critère d'optimisation. Dans le premier groupe, un mode de réalisation prévilégié fait appel à un filtre de Kalman étendu (Extended Kalman Filter ou EKF). Dans un filtre de Kalman, on insère à la fréquence d'échantillonnage une innovation calculée à partir d'un vecteur de mesure qui vient corriger avec le gain du filtre le vecteur d'état estimé a priori par un modèle d'état. La version étendue du filtre de Kalman permet d'utiliser des modèles d'état et de mesures non-linéaires. La méthode est décrite plus en détail plus loin dans la description. L'emploi de cette technique de filtrage permet de fusionner les mesures accélérométriques et gyrométriques pour estimer les angles de roulis et de tangage. De cette manière, les erreurs présentes sur les mesures (bruits de mesure, perturbations,...) se compensent mutuellement. Il s'effectue ainsi une opération de lissage des mesures capteurs, ce qui aboutit à une solution optimale et donc robuste aux perturbations vibratoires. Ceci représente un avantage certain pour l'emploi du dispositif en créant un déplacement de l'élément mobile à l'écran exempt de tout tremblement. Un exemple de méthode d'optimisation est donné plus loin dans la description.

La figure 5 représente un dispositif de pointage dans un mode de réalisation comprenant un gyromètre trois axes. Comme indiqué plus haut, le capteur de vitesses angulaires peut disposer de deux ou trois axes. Dans le premier cas, il peut s'agir de deux capteurs mono-axe ou d'un capteur bi-axe. L'invention permet de calculer le déplacement de l'élément mobile dans une surface plane à partir des mouvements du pointeur pour des valeurs faibles de l'angle de tangage (inférieur à 30°). Cette condition est remplie dans la plupart des applications de pointage, sauf peut-être dans des jeux où l'amplitude du mouvement est particulièrement importante. Le choix d'un gyromètre à deux axes de mesures est une solution plus simple et moins coûteuse à mettre en oeuvre qu'une solution basée sur un gyromètre à trois axes. Dans cette deuxième solution, le dispositif de pointage comprend par exemple un capteur MEMS accéléromètre tri-axes 20 et un capteur MEMS gyromètre tri-axes 30 composé de trois mono-axe ou d'un mono-axe et d'un bi-axe. Le troisième axe gyromètre permet de s'affranchir de la contrainte sur la valeur de l'angle de tangage. La compensation des angles de tangage et roulis est totale, le déplacement du curseur à l'écran devient alors indépendant de l'orientation du dispositif sur le porteur. Un exemple d'application est présenté sur la figure 5. Les capteurs sont positionnés dans la partie haute du dispositif dont l'orientation est différente de la partie basse, tenue par le porteur. Les axes capteurs sont définis par le repère (X, V, Z). Lorsque le porteur du dispositif effectue une rotation autour de l'axe w, le gyromètre, placé dans la partie inclinée du dispositif, détecte une rotation sur les axes X et Z, fonction de l'angle de tangage $\theta$. La détermination de l'angle $\theta$ couplée à la connaissance des mesures de vitesse angulaire sur les axes X et Z permet alors d'en déduire la vitesse angulaire autour de l'axe w. L'avantage d'une mesure gyromètre tri-axe peut également être mis en évidence sur un dispositif dont la forme ne permet pas de définir une orientation de référence, ce qui est par exemple le cas d'un dispositif sphérique dont aucun repère ne permet de déterminer l'orientation.

La figure 6 est un organigramme des traitements dans un mode de réalisation de l'invention. Les traitements opérés se distinguent dans les deux modes de réalisation indiqués ci-dessus (gyromètre à deux ou trois axes) uniquement par le fait que dans le premier cas la vitesse angulaire autour de l'axe X du dispositif de pointage est prise égale à zéro et donc supprimée des modèles et calculs. Dans le mode de réalisation représenté, l'opération de compensation de torsion s'effectue en deux étapes, une étape 1 d'estimation des angles $\theta$ et $\psi$ de pitch et de roll par un EKF et une étape 2 de calcul des composantes de vitesse angulaire $\omega_v$, $\omega_w$ liées au déplacement de l'élément mobile par rapport au référentiel de l'utilisateur.

L'EKF est la version non-linéaire du filtre de Kalman. Voir par exemple : KALMAN R.E. A new approach to linear filtering and prediction problems. Transactions of the ASME - Journal of Basic Engineering, 82,p.35-45, 1960 ; WELCH G., BISHOP G. An introduction to the Kalman Filter. SIGGRAPH 2001. La résolution du problème par cette famille de filtres est faite de manière statistique en minimisant la covariance d'erreur d'estimation. Par conséquent, le filtre de Kalman, utilisé sous sa forme initiale, est une méthode de résolution optimale. Lorsque le problème est défini de manière non-linéaire (EKF), la propagation de la covariance de l'erreur des variables d'état est calculée grâce aux matrices jacobiennes définies à la valeur courante des variables d'état. Une linéarisation est donc nécessaire à chaque pas de calcul, ce qui peut être source d'instabilités numériques et par conséquent de divergence de la solution. Toutefois, l'EKF est le filtre le plus employé sur les procédés physiques étant donné sa robustesse et la qualité des résultats obtenus. La mise en oeuvre de ce filtre est faite de manière privilégiée en utilisant la factorisation de type connu sous l'acronyme « QR » de l'EKF proposée par Barraud (BARRAUD A. Outils d'analyse numérique pour l'automatique. Ed. Hermes - Lavoisier, Paris, 2002). Cette implémentation présente l'avantage d'offrir une meilleure stabilité des matrices de covariance que les mises en oeuvre standard de l'EKF. Cet algorithme est rappelé de manière succincte ci-dessous.

On commence par initialiser un vecteur d'état qui comprend les variables représentatives de l'état du système :

$$\hat{x}_0 = E[x_0] \qquad\qquad \text{Eq. 3}$$

$$P_0 = E\left[(x_0 - \hat{x}_0)(x_0 - \hat{x}_0)^T\right] = P_{0\_f}^T P_{0\_f} \qquad\qquad \text{Eq. 4}$$

Où

$\hat{x}_0$ : vecteur d'état initial (k = 0)
$P_0$ : matrice de covariance liée à l'erreur d'état initiale
$P_{0\_f}$ : forme factorisée de la matrice $P_0$ de covariance de l'erreur d'état ($P_0 = P_{0\_f}^T . P_{0\_f}$).
E[x] est l'espérance mathématique
T est l'opérateur de transposition matricielle.

A partir des autres notations suivantes :

$\hat{x}_{k|k\_1}$ : vecteur d'état estimé à l'instant k à partir de l'instant k-1

$\hat{x}_{k|k}$ : vecteur d'état estimé à l'instant k à partir de l'instant k

$y_k$ : vecteur de mesures

$\hat{y}_k$ : valeurs estimées du vecteur de mesures

*f, h :* fonctions du modèle d'états, du modèle de mesures

on définit ensuite deux modèles de prédiction de l'évolution du vecteur d'état et du vecteur de mesures :

$$\hat{x}_{k|k-1} = f\left(\hat{x}_{k-1|k-1}\right)$$

$$\hat{y}_k = h\left(\hat{x}_{k|k-1}\right)$$

On définit ensuite les corrections à appliquer au vecteur d'état en tenant compte des covariances des bruits de modélisation (Q) et des bruits de mesures (R) :

$$A_k = \frac{\partial f}{\partial x}\bigg|_{\hat{x}_{k-1|k-1}} \qquad \text{Eq. 5}$$

$$C_k = \frac{\partial h}{\partial x}\bigg|_{\hat{x}_{k-1|k-1}} \qquad \text{Eq. 6}$$

$$M = \begin{bmatrix} R_f & 0 \\ P_f.C^T & P_f.A^T \\ 0 & Q_f \end{bmatrix} \qquad \text{Eq. 7}$$

$$HM = qr(M) = \begin{bmatrix} L & K \\ 0 & P_f \\ 0 & 0 \end{bmatrix} \qquad \text{Eq. 8}$$

$$G = K^T.L^{-T} \qquad \text{Eq. 9}$$

$$\hat{x}_{k|k} = \hat{x}_{k|k-1} + G.(y_k - \hat{y}_k) \qquad \text{Eq. 10}$$

Où :

$A_k$ : matrice jacobienne de la fonction f du modèle d'état calculée en $\hat{x}_{k-1|k-1}$

$C_k$ : matrice jacobienne de la fonction h du modèle de mesure calculée en $\hat{x}_{k-1|k-1}$

H*M* : triangularisation de M par factorisation orthogonale

$R_f$ : forme factorisée de la matrice *R* de covariance du bruit de mesure ($R = R_f^T.R_f$).

$Q_f$ : forme factorisée de la matrice *Q* de covariance du bruit de modélisation ($Q = Q_f^T.Q_f$).

G est la grandeur que l'on qualifie généralement de gain dans un filtre de Kalman. On notera que les matrices sont en fait calculées à chaque étape d'échantillonnage, l'indice k ayant cependant été omis ci-dessus pour alléger les formules.

Dans un premier mode de réalisation, le vecteur d'état choisi pour résoudre le problème est : x = [$\theta$ $\psi$]. Où $\theta$ et $\psi$ sont respectivement les angles de pitch et de roll. Le vecteur de mesures est : *y* = [$a_X$ $a_Y$ $a_Z$] (mesures du ou des accéléromètres). Les équations du modèle d'état sont obtenues à partir de l'expression de la vitesse angulaire :

$$\omega = \begin{pmatrix} \dot{\psi} - \dot{\varphi}.sin\,\theta \\ \dot{\varphi}.cos\,\theta.sin\,\psi + \dot{\theta}.cos\,\psi \\ \dot{\varphi}.cos\,\theta.cos\,\psi - \dot{\theta}.sin\,\psi \end{pmatrix}$$ Eq. 11

L'angle $\varphi$ représente ici l'angle de lacet permettant de passer du repère (*uvw*) au repère (*XYZ*). Or, étant donné la définition de ces repères, cet angle est nul et donc sa dérivée également.

L'expression de $\omega$ devient :

$$\omega = \begin{pmatrix} \dot{\psi} \\ \dot{\theta}.cos\,\psi \\ -\dot{\theta}.sin\,\psi \end{pmatrix}$$ Eq. 12

Il existe donc trois relations traduisant l'évolution de $\theta$ :

$$\dot{\theta} = -\frac{\omega_Z}{sin\,\psi}$$ Eq. 13

$$\dot{\theta} = \frac{\omega_Y}{cos\,\psi}$$ Eq. 14

$$\dot{\theta} = \alpha.\sqrt{\omega_Y^2 + \omega_Z^2}$$ Eq. 15

avec $\alpha = \pm 1$.

Nous choisissons d'utiliser l'équation 15 qui permet de faire intervenir les deux ou trois mesures gyrométriques, ce qui renforce la robustesse du filtre (utilisation conjointe des mesures gyromètres et accéléromètres). Le paramètre $\alpha$ est alors déterminé avec l'une des deux autres expressions. Les mesures gyrométriques sont donc utilisées comme variables d'entrée du modèle.

Nous constatons par ailleurs que $\omega_X$ est égale à la dérivée de l'angle de roll.

Les équations du modèle d'état sont donc :

$$\begin{cases} \dot{\theta} = \alpha.\sqrt{\omega_Y^2 + \omega_Z^2} \\ \dot{\psi} = \omega_X \end{cases}$$ Eq. 16

Dans le mode de réalisation à capteur de vitesses angulaires selon deux axes, on prendra l'hypothèse que $\omega_X = 0$.

Les équations du modèle de mesure sont :

$$y = mesures_{accéléro} = R(\theta,\psi).G_0$$ Eq. 17

avec $R(\theta,\psi) = \begin{pmatrix} cos\,\theta & 0 & -sin\,\theta \\ sin\,\theta.sin\,\psi & cos\,\psi & cos\,\theta.sin\,\psi \\ sin\,\theta.cos\,\psi & -sin\,\psi & cos\,\theta.cos\,\psi \end{pmatrix}$ et $G_0 = [0\ 0\ 1]$

soit

$$y = \begin{vmatrix} -\sin\theta \\ \cos\theta.\sin\psi \\ \cos\theta.\cos\psi \end{vmatrix} \qquad \text{Eq. 18}$$

Enfin, on détermine les vitesses angulaires dans le repère de l'utilisateur par les relations :

$$\begin{cases} \omega_v = \cos\psi.\omega_Y - \sin\psi.\omega_Z \\ \omega_w = -\sin\theta.\omega_X + \cos\theta.\sin\psi.\omega_Y + \cos\theta.\cos\psi.\omega_Z \end{cases} \qquad \text{Eq. 19}$$

On détaille maintenant ci-dessous les différentes étapes de l'algorithme mis en oeuvre dans le filtre de Kalman.

Dans l'étape d'initialisation, le vecteur d'état initial $x_0$ est pris égal à zéro ou à un état $[\theta_0\ \psi_0]$ choisi a priori :

$$X_0 = [0\ 0] \qquad \text{ou} \qquad X_0 = [\theta_0\ \psi_0] \qquad \text{Eq. 20}$$

On réalise ensuite l'estimation de la torsion au sein du filtre de Kalman étendu par la succession des calculs suivants :

- estimation a priori du vecteur d'état par intégration numérique du modèle dynamique choisi (dans l'équation suivante, $T_e$ est la période d'échantillonnage) :

$$\hat{x}_k^- = \begin{pmatrix} \hat{\theta}_k^- \\ \hat{\psi}_k^- \end{pmatrix} = \begin{pmatrix} \hat{\theta}_{k-1} \\ \hat{\psi}_{k-1} \end{pmatrix} + T_e.\begin{pmatrix} \alpha.\sqrt{\omega_Y^2 + \omega_Z^2} \\ \omega_x \end{pmatrix} \qquad \text{Eq. 21}$$

- estimation a priori des mesures :

$$\hat{y}_k^- = \begin{vmatrix} -\sin\hat{\theta}_k^- \\ \cos\hat{\theta}_k^-.\sin\hat{\psi}_k^- \\ \cos\hat{\theta}_k^-.\cos\hat{\psi}_k^- \end{vmatrix} \qquad \text{Eq. 22}$$

- calcul du gain G du filtre de Kalman (utilisation de la forme factorisée de type QR de l'EKF), défini par les équations 7, 8 et 9.
- correction de l'état estimé a priori :

$$\hat{x}_k = \hat{x}_k^- + K_k.\left(\begin{bmatrix} a_{X,k} \\ a_{Y,k} \\ a_{Z,k} \end{bmatrix} - \hat{y}_k^-\right) \qquad \text{Eq. 23}$$

Les composantes $\omega_v$ et $\omega_w$ peuvent alors être calculées par les formules suivantes :

$$\begin{cases} \omega_v = \cos\hat{\psi}.\omega_Y - \sin\hat{\psi}.\omega_Z \\ \omega_w = -\sin\hat{\theta}.\omega_X + \cos\hat{\theta}.\sin\hat{\psi}.\omega_Y + \cos\hat{\theta}.\cos\hat{\psi}.\omega_Z \end{cases} \qquad \text{Eq. 24}$$

Pour mettre en oeuvre l'algorithme de l'EKF, il est nécessaire de déterminer une série de paramètres relatifs à la confiance accordée à l'état initial regroupés dans la matrice $P_0$, au modèle d'état regroupés dans la matrice Q et au modèle de mesures regroupés dans la matrice R.

Le réglage de ces paramètres s'effectue par essai-erreur. Toutefois, quelques indications générales peuvent être données. La matrice $P_0$ traduit la confiance accordée à la valeur initiale de l'état. L'état initial est supposé nul, ce qui peut être assez éloigné de la réalité. Il ne faut donc pas lui accorder une confiance trop élevée, d'où une valeur de $P_0$ relativement élevée (de l'ordre de $10^{-2}$).

La matrice $Q$ traduit la confiance accordée au modèle d'état. L'imprécision de l'équation d'évolution de $\theta$ est issue de l'imprécision numérique lors de l'intégration des équations mais aussi du bruit des mesures gyrométriques. Les valeurs choisies pour les éléments de la matrice $Q$ liés à $\theta$ sont donc légèrement supérieures à l'écart-type du bruit de mesures du gyromètre. Les valeurs choisies pour les éléments liés à $\psi$ seront plus faibles (rapport $10^{-2}$ environ).

La matrice $R$ traduit la confiance accordée au modèle de mesures. L'imprécision de celui-ci est liée au bruit de mesures mais aussi aux accélérations propres mesurées par les accéléromètres (tremblements de la main, mouvements brusques,...). Les valeurs choisies pour cette matrice sont donc légèrement supérieures à l'écart-type du bruit de mesures de l'accéléromètre.

Plusieurs variantes de réalisation sont possibles. Pour certaines, il est avantageux de conserver un algorithme en deux étapes qui permet de minimiser le nombre de variables d'état du filtre de Kalman.

Une première variante de réalisation consiste à remplacer les angles de torsion $\theta$ et $\psi$ par une formulation en quaternions de la même torsion. Cette variante présente l'avantage d'éviter les calculs des sinus et cosinus des angles de tangage et de roulis gourmands en puissance de calcul. De manière générale, un quaternion de rotation est défini par 4 éléments :

$$q = \begin{vmatrix} q_0 \\ q_1 \\ q_2 \\ q_3 \end{vmatrix} \quad \text{avec} \quad \left\{ \begin{array}{l} q_0 = cos\dfrac{\alpha}{2} \\[2mm] \begin{vmatrix} q_1 \\ q_2 \\ q_3 \end{vmatrix} = sin\dfrac{\alpha}{2}.\begin{vmatrix} u_1 \\ u_2 \\ u_3 \end{vmatrix} \end{array} \right. \qquad \text{Eq. 25}$$

$\alpha$ étant l'angle de la rotation et $u = \begin{vmatrix} u_1 \\ u_2 \\ u_3 \end{vmatrix}$ l'axe de cette rotation

On choisit le vecteur d'état suivant :

$$x = [q_0 \; q_1 \; q_2 \; q_3]$$

Le modèle d'état est le suivant :

$$\dot{q} = \frac{1}{2}.\begin{vmatrix} q_0 \\ q_1 \\ q_2 \\ q_3 \end{vmatrix} \otimes \begin{vmatrix} 0 \\ \omega_X \\ \omega_Y \\ \omega_Z \end{vmatrix} \qquad \text{Eq. 26}$$

$\otimes$ symbolisant la multiplication de deux quaternions.
$\omega_x = 0$ dans le cas d'un capteur de vitesses angulaires à deux axes de mesures.

Le modèle de mesures est :

$$y = [a_X \; a_Y \; a_Z]$$

Les vitesses angulaires $\omega_v$ et $\omega_w$ sont ensuite obtenues par l'équation :

$$\begin{pmatrix} 0 \\ \omega_u \\ \omega_v \\ \omega_w \end{pmatrix} = q \otimes \begin{pmatrix} 0 \\ \omega_X \\ \omega_Y \\ \omega_Z \end{pmatrix} \otimes \overline{q} \qquad \text{Eq. 27}$$

$\overline{q}$ étant le quaternion conjugué de q (ie si q = q0 + q1 . i + q2 . j + q3 . k, $\overline{q}$ = q0 - q1 . i-q2.j-q3. k).

Une deuxième variante d'algorithme à deux étapes, décrite à titre d'exemple, supprime par rapport au premier mode de réalisation décrit le calcul direct des angles de tangage et de roulis. Cela permet également d'économiser du temps de calcul. Toutefois, dans cette variante, il n'y a pas de couplage des mesures gyrométriques et accélérométriques dans le filtre de Kalman. Il est donc possible que la résistance aux tremblements soit réduite. On utilise le vecteur d'état suivant :

$$\begin{bmatrix} a \\ b \\ c \\ d \end{bmatrix} = \begin{bmatrix} \sin \theta \\ \cos \theta \\ \sin \psi \\ \cos \psi \end{bmatrix} \qquad \text{Eq. 28}$$

Le modèle d'état est :

$$\dot{x} = \begin{bmatrix} \dot{a} \\ \dot{b} \\ \dot{c} \\ \dot{d} \end{bmatrix} = \begin{bmatrix} 0 & -1 & 0 & 0 \\ 1 & 0 & 0 & 0 \\ 0 & 0 & 0 & -1 \\ 0 & 0 & 1 & 0 \end{bmatrix} \cdot \begin{bmatrix} a \\ b \\ c \\ d \end{bmatrix} \qquad \text{Eq. 29}$$

Et le modèle de mesures :

$$y = \begin{bmatrix} a_X \\ a_Y \\ a_Z \end{bmatrix} = \begin{bmatrix} -a \\ b.c \\ b.d \end{bmatrix} \qquad \text{Eq. 30}$$

Ces modèles s'appliquent indifféremment au dispositif à capteur de vitesses angulaires selon deux axes et selon trois axes.

Les vitesses angulaires $\omega_v$ et $\omega_w$ sont ensuite obtenues par les équations, dans le cas d'une mesure deux axes de la vitesse angulaire :

$$\begin{cases} \omega_v = d.\omega_Y - c.\omega_Z \\ \omega_w = b.c.\omega_Y + b.d.\omega_Z \end{cases} \qquad \text{Eq. 31}$$

dans le cas d'une mesure trois axes de la vitesse angulaire :

$$\begin{cases} \omega_v = d.\omega_Y - c.\omega_Z \\ \omega_w = -a.\omega_X + b.c.\omega_Y + b.d.\omega_Z \end{cases} \qquad \text{Eq. 32}$$

L'équation 32 se ramène à l'équation 31 dans le cas d'une mesure deux axes en prenant $\omega_x$ égal à zéro comme vu dans les autres variantes.

Dans les modes de réalisation décrits ci-dessus, l'algorithme est décomposé en deux étapes principales, avec l'avantage de diminuer la dimension du vecteur d'état et de simplifier les calculs dans le filtre. Toutefois, une variante consiste à résoudre le problème en une étape unique. Le vecteur d'état et le vecteur de mesure deviennent alors :

$$x = [\theta \; \psi \; \omega_u \; \omega_v \; \omega_w]$$

$$y = [a_X \; a_Y \; a_Z \; \omega_X \; \omega_Y \; \omega_Z]$$

$\omega_x = 0$ dans le cas d'un capteur de vitesses angulaires à deux axes de mesures. Dans cette variante, nous proposons de définir les angles $\theta$ et $\psi$ comme étant les angles de la rotation traduisant le passage du repère (*XYZ*) au repère (*uvw*), rotation inverse au cas précédent. Ceci permet d'exprimer $\theta$ et $\psi$ à partir du vecteur vitesse angulaire exprimé dans le repère (*uvw*). Les variables d'état sont donc liées par les équations du modèle d'état rendant ainsi plus robuste cette formulation.

Le modèle d'état est :

$$\begin{cases} \dot{\theta} = \alpha.\sqrt{\omega_v^2 + \omega_w^2} \\ \dot{\psi} = \omega_u \\ \dot{\omega}_u = -\dfrac{1}{\tau}.\omega_u \\ \dot{\omega}_v = -\dfrac{1}{\tau}.\omega_v \\ \dot{\omega}_w = -\dfrac{1}{\tau}.\omega_w \end{cases} \qquad \text{Eq. 33}$$

où $\tau$ : constante de temps du modèle d'évolution de la vitesse angulaire (s).

Les modèles de mesures sont différents selon que l'on utilise les mesures de deux axes ou de trois axes de capteurs de vitesses angulaires. Dans le cas à deux axes :

$$\begin{cases} a_X = -sin\,\theta.cos\,\psi \\ a_Y = -sin\,\psi \\ a_Z = cos\,\theta.cos\,\psi \\ \omega_Y = sin\,\theta.sin\,\psi.\omega_u + cos\,\psi.\omega_v + cos\,\theta.sin\,\psi.\omega_w \\ \omega_Z = sin\,\theta.cos\,\psi.\omega_u - sin\,\psi.\omega_v + cos\,\theta.cos\,\psi.\omega_w \end{cases} \qquad \text{Eq. 34}$$

Dans le cas à trois axes :

$$\begin{cases} a_X = -\sin\theta.\cos\psi \\ a_Y = -\sin\psi \\ a_Z = \cos\theta.\cos\psi \\ \omega_X = \cos\theta.\omega_u - \sin\theta.\omega_w \\ \omega_Y = \sin\theta.\sin\psi.\omega_u + \cos\psi.\omega_v + \cos\theta.\sin\psi.\omega_w \\ \omega_Z = \sin\theta.\cos\psi.\omega_u - \sin\psi.\omega_v + \cos\theta.\cos\psi.\omega_w \end{cases} \qquad \text{Eq. 35}$$

Il est à noter que cette formulation entraîne une augmentation du nombre de paramètres de réglage. De plus, le choix du modèle d'évolution de la vitesse angulaire est généralement délicat puisqu'aucune loi physique ne permet de décrire « le mouvement aléatoire » du porteur du dispositif. Toutefois, ce mode de réalisation présente l'avantage de donner accès à une estimation de la composante $\omega_u$ de la vitesse angulaire sans utiliser nécessairement la mesure $\omega_X$.

Le filtre de Kalman Etendu entre dans la catégorie des observateurs non-linéaires. Ce filtre est généralement employé du fait de sa robustesse et de la qualité des résultats obtenus. Toutefois, il peut être sujet à des problèmes d'instabilité numérique et à une absence de preuve de convergence. D'autres observateurs, tels les observateurs à grand gain ou encore les observateurs à horizon glissant, peuvent être utilisés, la convergence de ceux-ci pouvant être prouvée mathématiquement. Ces observateurs présentent également un nombre de paramètres de réglage restreint, d'où une facilité de mise en oeuvre. Celle-ci pourra s'effectuer en utilisant les modèles d'état et de mesure décrits précédemment.

Les informations précédentes prises en compte dans les modes de réalisation de l'invention comprenant un EKF pour décrire les évolutions d'état et les modèles de mesure peuvent être également utilisées dans le cas des méthodes comprenant un opérateur non linéaire à minimisation d'un coût ou d'une erreur. Les modèles de mesure sont en général pris en compte dans le critère d'erreur qui globalement mesure la distance entre la mesure réelle à l'instant t et la mesure prédite par le modèle sachant l'estimation de l'état à l'instant t-1. Le modèle de l'évolution de l'état quant à lui est généralement mis à profit pour fixer la valeur de départ de ces méthodes de minimisation d'erreur. On applique à l'estimation d'état précédente les fonctions d'évolution, ce qui permet de prédire l'état suivant, donnée de départ pour la fonction d'optimisation.

Ainsi, la compensation des angles de torsion peut également être opérée par une méthode de résolution optimale ne faisant pas appel à un observateur. Parmi les méthodes d'optimisation de ce type on peut citer par exemple la descente de gradient, l'optimisation de Newton, ou une méthode d'optimisation dite quasi-Newton... Comme dans le cas du filtre de Kalman, deux formulations différentes peuvent être mises en oeuvre :

- une optimisation conjointe des variables $\theta\ \psi\ \omega_u\ \omega_v\ \omega_w$,
- une estimation en deux étapes successives : estimation des angles $[\theta\ \psi]$ par optimisation puis calcul analytique de $\omega_v$ et $\omega_w$ en utilisant l'équation 19.

Dans ces deux cas, le critère d'optimisation est défini par :

$$f = \sum_{i=1}^{n} \left(mesures_{capteurs} - mesures_{estimées}\right)^T.\left(mesures_{capteurs} - mesures_{estimées}\right) \qquad \text{Eq. 36}$$

avec dans le cas de la première formulation (résolution en une étape),

$$mesures_{capteurs} = \begin{bmatrix} a_X \\ a_Y \\ a_Z \\ 0\ ou\ \omega_X \\ \omega_Y \\ \omega_Z \end{bmatrix} \qquad \text{Eq. 37}$$

$$mesures_{estimées} = \begin{bmatrix} -\sin\theta \\ \cos\theta.\sin\psi \\ \cos\theta.\cos\psi \\ \cos\theta.\omega_u - \sin\theta.\omega_w \\ \sin\theta.\sin\psi.\omega_u + \cos\psi.\omega_v + \cos\theta.\sin\psi.\omega_w \\ \sin\theta.\cos\psi.\omega_u - \sin\psi.\omega_v + \cos\theta.\cos\psi.\omega_w \end{bmatrix} \qquad \text{Eq. 38}$$

et dans le cas de la seconde formulation (résolution en deux étapes),

$$mesures_{capteurs} = \begin{bmatrix} a_X \\ a_Y \\ a_Z \end{bmatrix} \qquad \text{Eq. 39}$$

$$mesures_{estimées} = \begin{bmatrix} -\sin\theta \\ \cos\theta.\sin\psi \\ \cos\theta.\cos\psi \end{bmatrix} \qquad \text{Eq. 40}$$

On notera que pour certaines applications où l'économie de puissance de calcul est plus importante que le lissage des tremblements et autres perturbations des mesures accélérométriques, une méthode de résolution analytique peut être préférée à une méthode de résolution optimale.

Dans ce cas, la résolution analytique se fait en deux étapes :

- Calcul des cos/sin des orientations $\theta$ et $\psi$

A partir de l'expression des mesures accélérométriques (Eq. 2), nous déduisons :

$$\begin{cases} \cos\theta = \pm\sqrt{a_Y^2 + a_Z^2} \\ \sin\theta = -a_X \end{cases} \qquad \begin{cases} \cos\psi = \dfrac{a_Z}{\pm\sqrt{a_Y^2 + a_Z^2}} \\ \sin\psi = \dfrac{a_Y}{\pm\sqrt{a_Y^2 + a_Z^2}} \end{cases} \qquad \text{Eq. 41}$$

Nous faisons l'hypothèse que l'angle $\theta$ est compris entre $-\dfrac{\pi}{2}$ et $+\dfrac{\pi}{2}$, ce qui permet de lever l'indétermination sur le signe de $\cos\theta$ : $\cos\theta = +\sqrt{a_Y^2 + a_Z^2}$ .

- Calcul de $\omega_v$ et $\omega_w$

$$\begin{pmatrix} \omega_u \\ \omega_v \\ \omega_w \end{pmatrix} = R^T . \begin{pmatrix} \omega_X \\ \omega_Y \\ \omega_Z \end{pmatrix} \qquad \text{Eq.42}$$

$$\begin{cases} \omega_u = cos\,\theta.\omega_X + sin\,\theta.sin\,\psi.\omega_Y + sin\,\theta.cos\,\psi.\omega_Z \\ \omega_v = cos\,\psi.\omega_Y - sin\,\psi.\omega_Z \\ \omega_w = -sin\,\theta.\omega_X + cos\,\theta.sin\,\psi.\omega_Y + cos\,\theta.cos\,\psi.\omega_Z \end{cases} \qquad \text{Eq. 43}$$

Les exemples décrits ci-dessus sont donnés à titre d'illustration de modes de réalisation de l'invention et d'autres aspects de la description. Ils ne limitent en aucune manière le champ de l'invention qui est défini par les revendications qui suivent.

**Revendications**

**1.** Dispositif de pointage (10) par un utilisateur sur un élément mobile dans une surface plane, ledit dispositif comprenant au moins un premier capteur de mesure (20) des vitesses angulaires ($\omega_Y$, $\omega_Z$) dudit dispositif autour d'au moins deux de ses axes orthogonaux (Y, Z), au moins un deuxième capteur de mesure (30) des déplacements linéaires dudit dispositif selon lesdits deux axes (Y, Z) et un troisième axe orthogonal (X), un module de calcul (40) des déplacements (y, z) à imprimer à l'élément mobile dans la surface plane en fonction des déplacements du dispositif de pointage dans l'espace, ledit module de calcul comprenant un sous-module (50) de compensation de la torsion imprimée au dispositif de pointage mettant en oeuvre un algorithme de fusion de données, ledit algorithme faisant appel à un observateur ou utilisant un critère d'optimisation, ledit dispositif de pointage étant **caractérisé en ce que** ledit algorithme de fusion de données est configuré pour : i) recevoir en entrée au moins des mesures par le premier capteur des vitesses angulaires ($\omega_Y$, $\omega_Z$) et des mesures par le deuxième capteur des accélérations linéaires selon lesdits trois axes ($a_X$, $a_Y$, $a_Z$) ; ii) à partir des dites mesures , estimer un vecteur d'état comprenant des variables représentatives des angles de torsion tangage ($\theta$) et roulis ($\psi$) imprimée au dispositif et fournir au moins des vitesses angulaires ($\omega_v$, $\omega_w$) du dispositif dans un repère porteur lié à l'utilisateur, représentatives des déplacements (y, z) de l'élément mobile.

**2.** Dispositif de pointage selon la revendication 1, **caractérisé en ce que** le vecteur d'état comprend en outre les vitesses angulaires ($\omega_v$, $\omega_w$) dans le repère porteur.

**3.** Dispositif de pointage selon la revendication 1 **caractérisé en ce que** le premier capteur est un gyromètre à deux axes.

**4.** Dispositif de pointage selon la revendication 1 **caractérisé en ce que** le premier capteur est un gyromètre à trois axes.

**5.** Dispositif selon la revendication 1 **caractérisé en ce que** le deuxième capteur est un accéléromètre à trois axes produisant des sorties $a_X$, $a_Y$, $a_Z$.

**6.** Dispositif de pointage selon la revendication 1 **caractérisé en ce que** l'algorithme de fusion met en oeuvre un filtrage de Kalman étendu.

**7.** Dispositif de pointage selon la revendication 6 **caractérisé en ce que** le filtre de Kalman satisfait au moins une des conditions suivantes : son vecteur d'état (x) comprend au moins un angle de torsion ($\theta$, $\psi$) du dispositif de pointage ; son modèle d'état comprend au moins l'expression de la vitesse angulaire ($\omega$) dudit dispositif de pointage en fonction d'au moins un des angles de torsion ($\theta$, $\psi$) ; son vecteur de mesures comprend au moins les sorties du deuxième capteur ($a_X$, $a_Y$, $a_Z$).

**8.** Dispositif de pointage selon la revendication 7 **caractérisé en ce que** le vecteur d'état du filtre de Kalman est initialisé à un état [$\theta_0\ \psi_0$] choisi a priori et **en ce que** l'estimation a priori du vecteur d'état ($\hat{x}_k^-$) à l'étape d'échantillonnage k du filtre de Kalman est calculé par la formule suivante : $\hat{x}_k^- = \begin{pmatrix} \hat{\theta}_k^- \\ \hat{\psi}_k^- \end{pmatrix} = \begin{pmatrix} \hat{\theta}_{k-1} \\ \hat{\psi}_{k-1} \end{pmatrix} + T_e \cdot \begin{pmatrix} \alpha.\sqrt{\omega_Y^2 + \omega_Z^2} \\ \omega_x \end{pmatrix}$

où $T_e$ est la période d'échantillonnage du filtre.

**9.** Dispositif de pointage selon la revendication 7 **caractérisé en ce que** l'estimation a priori des mesures ($\hat{y}_k^-$) à

l'étape d'échantillonnage k du filtre de Kalman est calculé par la formule suivante :

$$\hat{y}_k^- = \begin{vmatrix} -\sin\hat{\theta}_k^- \\ \cos\hat{\theta}_k^- . \sin\hat{\psi}_k^- \\ \cos\hat{\theta}_k^- . \cos\hat{\psi}_k^- \end{vmatrix}$$

**10.** Dispositif de pointage selon la revendication 7 **caractérisé en ce que** le gain G du filtre de Kalman est calculé par les formules suivantes :

$$A_k = \frac{\partial f}{\partial x}\Big|_{\hat{x}_{k-1|k-1}}$$

$$C_k = \frac{\partial h}{\partial x}\Big|_{\hat{x}_{k-1|k-1}}$$

$$M = \begin{bmatrix} R_f & 0 \\ P_f . C^T & P_f . A^T \\ 0 & Q_f \end{bmatrix}$$

$$HM = qr(M) = \begin{bmatrix} L & K \\ 0 & P_f \\ 0 & 0 \end{bmatrix}$$

$$G = K^T . L^{-T}$$

**11.** Dispositif de pointage selon la revendication 7 **caractérisé en ce que** la correction de l'état estimé a priori à l'étape d'échantillonnage k du filtre de Kalman est calculé par la formule suivante :

$$\hat{x}_k = \hat{x}_k^- + K_k . \left( \begin{bmatrix} a_{X,k} \\ a_{Y,k} \\ a_{Z,k} \end{bmatrix} - \hat{y}_k^- \right)$$

**12.** Dispositif de pointage selon la revendication 7 **caractérisé en ce que** les composantes $\omega_v$ et $\omega_w$ de la vitesse angulaire dans le repère de l'utilisateur sont calculés par les formules suivantes :

$$\begin{cases} \omega_v = \cos\hat{\psi} . \omega_Y - \sin\hat{\psi} . \omega_Z \\ \omega_w = -\sin\hat{\theta} . \omega_X + \cos\hat{\theta} . \sin\hat{\psi} . \omega_Y + \cos\hat{\theta} . \cos\hat{\psi} . \omega_Z \end{cases}$$

**13.** Dispositif de pointage selon la revendication 7 **caractérisé en ce que** le filtre de Kalman satisfait au moins une des conditions suivantes : la matrice $P_0$ de confiance accordée à la valeur initiale de l'état $(x_0)$ comprend des valeurs choisies de l'ordre de $10^{-2}$ ; la matrice Q de confiance accordée à son modèle d'état comprend des valeurs choisies dont les plus élevées sont légèrement supérieures à l'écart-type du bruit des mesures du premier capteur ; la matrice R de confiance accordée au modèle de mesures du filtre de Kalman comprend des valeurs choisies dont les plus élevées sont légèrement supérieures à l'écart-type du bruit des mesures du deuxième capteur.

**14.** Dispositif de pointage selon la revendication 6 **caractérisé en ce que** le filtre de Kalman satisfait au moins une des conditions suivantes : son vecteur d'état (x) est un quaternion de la forme [cos$\alpha$/2, sin $\alpha$/2 $u_1$, sin $\alpha$/2 $u_2$, $\alpha$/2 $u_3$] ; son modèle d'état est de la forme :

$$\dot{q} = \frac{1}{2} \cdot \begin{vmatrix} q_0 \\ q_1 \\ q_2 \\ q_3 \end{vmatrix} \otimes \begin{vmatrix} 0 \\ \omega_X \\ \omega_Y \\ \omega_Z \end{vmatrix} \; ;$$

son vecteur de mesures comprend au moins les sorties du deuxième capteur ($a_X$, $a_Y$, $a_Z$).

**15.** Dispositif de pointage selon la revendication 14 **caractérisé en ce que** les composantes $\omega_v$ et $\omega_w$ de la vitesse angulaire dans le repère de l'utilisateur sont calculés par la formule suivante :

$$\begin{pmatrix} 0 \\ \omega_u \\ \omega_v \\ \omega_w \end{pmatrix} = q \otimes \begin{pmatrix} 0 \\ \omega_X \\ \omega_Y \\ \omega_Z \end{pmatrix} \otimes \overline{q}$$

**16.** Dispositif de pointage selon la revendication 6 **caractérisé en ce que** le filtre de Kalman satisfait au moins une des conditions suivantes : son vecteur d'état (x) est de la forme [a, b, c, d] = [sin$\theta$, cos$\theta$, sin $\psi$, cos $\psi$] ; son modèle d'état est de la forme :

$$\dot{x} = \begin{bmatrix} \dot{a} \\ \dot{b} \\ \dot{c} \\ \dot{d} \end{bmatrix} = \begin{bmatrix} 0 & -1 & 0 & 0 \\ 1 & 0 & 0 & 0 \\ 0 & 0 & 0 & -1 \\ 0 & 0 & 1 & 0 \end{bmatrix} \begin{bmatrix} a \\ b \\ c \\ d \end{bmatrix} \; ;$$

son modèle de mesures est de la forme :

$$y = \begin{bmatrix} a_X \\ a_Y \\ a_Z \end{bmatrix} = \begin{bmatrix} -a \\ b.c \\ b.d \end{bmatrix}$$

**17.** Dispositif de pointage selon la revendication 16 **caractérisé en ce que** les composantes $w_v$ et $\omega_w$ de la vitesse angulaire dans le repère de l'utilisateur sont calculés par les formules suivantes :

$$\begin{cases} \omega_v = d.\omega_Y - c.\omega_Z \\ \omega_w = -a.\omega_X + b.c.\omega_Y + b.d.\omega_Z \end{cases}$$

**18.** Dispositif de pointage selon la revendication 5 **caractérisé en ce que** le vecteur d'état du filtre (x) de Kalman est de la forme [$\theta$, $\psi$, $\omega_u$, $\omega_v$, $\omega_w$] et **en ce que** son vecteur de mesures est de la forme [$a_X$, $a_y$, $a_Z$, $\omega_X$, $\omega_Y$, $\omega_Z$].

**19.** Dispositif de pointage selon la revendication 16 **caractérisé en ce que** le modèle d'état du filtre de Kalman est de la forme :

$$\begin{cases} \dot{\theta} = \alpha.\sqrt{\omega_v^2 + \omega_w^2} \\ \dot{\psi} = \omega_u \\ \dot{\omega}_u = -\dfrac{1}{\tau}.\omega_u \\ \dot{\omega}_v = -\dfrac{1}{\tau}.\omega_v \\ \dot{\omega}_w = -\dfrac{1}{\tau}.\omega_w \end{cases}$$

Où T est la constante de temps du modèle d'évolution de la vitesse angulaire et **en ce que** le modèle de mesures est de l'une des formes suivantes :

$$\begin{cases} a_X = -\sin\theta.\cos\psi \\ a_Y = -\sin\psi \\ a_Z = \cos\theta.\cos\psi \\ \omega_Y = \sin\theta.\sin\psi.\omega_u + \cos\psi.\omega_v + \cos\theta.\sin\psi.\omega_w \\ \omega_Z = \sin\theta.\cos\psi.\omega_u - \sin\psi.\omega_v + \cos\theta.\cos\psi.\omega_w \end{cases}$$

ou

$$\begin{cases} a_X = -\sin\theta.\cos\psi \\ a_Y = -\sin\psi \\ a_Z = \cos\theta.\cos\psi \\ \omega_X = \cos\theta.\omega_u - \sin\theta.\omega_w \\ \omega_Y = \sin\theta.\sin\psi.\omega_u + \cos\psi.\omega_v + \cos\theta.\sin\psi.\omega_w \\ \omega_Z = \sin\theta.\cos\psi.\omega_u - \sin\psi.\omega_v + \cos\theta.\cos\psi.\omega_w \end{cases}$$

**20.** Dispositif de pointage selon la revendication 1 **caractérisé en ce que** l'algorithme de fusion met en oeuvre une méthode de résolution optimale.

**21.** Dispositif de pointage selon la revendication 20 **caractérisé en ce que** la méthode de résolution optimale est une optimisation ayant pour critère la fonction :

$$f = \sum_{i=1}^{n} \left( mesures_{capteurs} - mesures_{estimées} \right)^T . \left( mesures_{capteurs} - mesures_{estimées} \right)$$

Avec un couple de vecteurs ($mesures_{capteurs}$, $mesures_{estimées}$) choisi dans le groupe

$$\left( mesures_{capteurs} = \begin{bmatrix} a_X \\ a_Y \\ a_Z \\ 0 \ ou \ \omega_X \\ \omega_Y \\ \omega_Z \end{bmatrix}, \right.$$

$$mesures_{estimées} = \begin{bmatrix} -sin\,\theta \\ cos\,\theta.sin\,\psi \\ cos\,\theta.cos\,\psi \\ cos\,\theta.\omega_u - sin\,\theta.\omega_w \\ sin\,\theta.sin\,\psi.\omega_u + cos\,\psi.\omega_v + cos\,\theta.sin\,\psi.\omega_w \\ sin\,\theta.cos\,\psi.\omega_u - sin\,\psi.\omega_v + cos\,\theta.cos\,\psi.\omega_w \end{bmatrix}),$$

$$( mesures_{capteurs} = \begin{bmatrix} a_X \\ a_Y \\ a_Z \end{bmatrix}, \qquad mesures_{estimées} = \begin{bmatrix} -sin\,\theta \\ cos\,\theta.sin\,\psi \\ cos\,\theta.cos\,\psi \end{bmatrix} )$$

**Patentansprüche**

1. Zeigegerät (10) zur Verwendung durch einen Benutzer auf einem beweglichen Element auf einer flachen Fläche, wobei das Gerät Folgendes umfasst: wenigstens einen ersten Sensor (20) zum Messen der Winkelgeschwindigkeiten ($\omega_Y$, $\omega_Z$) des Geräts um wenigstens zwei seiner orthogonalen Achsen (Y, Z), wenigstens einen zweiten Sensor (30) zum Messen der linearen Bewegungen des Geräts entlang den zwei Achsen (Y, Z) und einer dritten orthogonalen Achse (X), ein Modul (40) zum Berechnen von Bewegungen (y, z), die dem beweglichen Element auf der flachen Fläche in Abhängigkeit von den Bewegungen des Zeigegeräts im Raum zu vermitteln sind, wobei das Rechenmodul ein Submodul (50) zum Kompensieren der dem Zeigegerät vermittelten Torsion durch Implementieren eines Datenzusammenführungsalgorithmus umfasst, wobei der Algorithmus einen Beobachter oder ein Optimierungskriterium benutzt, wobei das Zeigegerät **dadurch gekennzeichnet ist, dass** der Datenzusammenführungsalgorithmus konfiguriert ist zum: i) Empfangen, am Eingang, wenigstens von Messwerten durch den ersten Winkelgeschwindigkeitssensor ($\omega_y$, $\omega_z$) und von Messwerten von dem zweiten linearen Beschleunigungssensor entlang den drei Achsen ($a_x$, $a_y$, $a_z$); ii) Schätzen, auf der Basis der Messwerte, eines Zustandsvektors, der Variablen umfasst, die Nick- (0) und Roll- ($\psi$) Torsionswinkel repräsentieren, die dem Gerät veimittelt wurden, und Zuführen wenigstens von Winkelgeschwindigkeiten ($\omega_v$, $\omega_w$) des Geräts, die Bewegungen (y, z) des beweglichen Elements repräsentieren, in einem Benutzerreferenzsystem, das mit dem Benutzer verknüpft ist.

2. Zeigegerät nach Anspruch 1, **dadurch gekennzeichnet, dass** der Zustandsvektor die Winkelgeschwindigkeiten ($\omega_v$, $\omega_w$) in dem Benutzerreferenzsystem umfasst.

3. Zeigegerät nach Anspruch 1, **dadurch gekennzeichnet, dass** der erste Sensor ein Gyrometer mit zwei Achsen ist.

4. Zeigegerät nach Anspruch 1, **dadurch gekennzeichnet, dass** der erste Sensor ein Gyrometer mit drei Achsen ist.

5. Zeigegerät nach Anspruch 1, **dadurch gekennzeichnet, dass** der zweite Sensor ein Beschleunigungsmesser mit drei Achsen ist, der die Ausgänge $a_x$, $a_y$, $a_z$ erzeugt.

6. Zeigegerät nach Anspruch 1, **dadurch gekennzeichnet, dass** der Datenzusammenführungsmechanismus ein erweitertes Kalman-Filter implementiert.

7. Zeigegerät nach Anspruch 6, **dadurch gekennzeichnet, dass** das Kalman-Filter wenigstens eine der folgenden Bedingungen erfüllt: sein Zustandsvektor (x) umfasst wenigstens einen Torsionswinkel ($\theta$, $\psi$) des Zeigegeräts; sein Zustandsmodell umfasst wenigstens einen Ausdruck der Winkelgeschwindigkeit ($\omega$) des Zeigegeräts in Abhängigkeit von wenigstens einem der Torsionswinkel ($\theta$, $\psi$); sein Messwertvektor umfasst wenigstens die Ausgänge des zweiten Sensors ($a_x$, $a_y$, $a_z$).

8. Zeigegerät nach Anspruch 7, **dadurch gekennzeichnet, dass** der Zustandsvektor des Kalman-Filters in einem a

priori gewählten Zustand ($\theta_0$, $\psi_0$) initialisiert wird, und dadurch, dass die a priori Schätzung des Zustandsvektors $\left( \hat{x}_k^- \right)$ im Abtastschritt k des Kalman-Filters gemäß der folgenden Formel berechnet wird:

$$\hat{x}_k^- = \begin{pmatrix} \hat{\theta}_k^- \\ \hat{\psi}_k^- \end{pmatrix} = \begin{pmatrix} \hat{\theta}_{k-1} \\ \hat{\psi}_{k-1} \end{pmatrix} + T_e \cdot \begin{pmatrix} \alpha \cdot \sqrt{\omega_Y^2 + \omega_Z^2} \\ \omega_x \end{pmatrix} \quad ,$$

wobei $T_e$ die Abtastperiode des Filters ist.

9. Zeigegerät nach Anspruch 7, **dadurch gekennzeichnet, dass** die a priori Schätzung der Messweite $\left( \hat{y}_k^- \right)$ im Abtastschritt k des Kalman-Filters gemäß der folgenden Formel berechnet wird:

$$\hat{y}_k^- = \begin{vmatrix} -\sin \hat{\theta}_k^- \\ \cos \hat{\theta}_k^- \cdot \sin \hat{\psi}_k^- \\ \cos \hat{\theta}_k^- \cdot \cos \hat{\psi}_k^- \end{vmatrix}$$

10. Zeigegerät nach Anspruch 7, **dadurch gekennzeichnet, dass** der Gewinn G des Kalman-Filters gemäß den folgenden Formeln berechnet wird:

$$A_k = \frac{\partial f}{\partial x} \Big|_{\hat{x}_{k-1|k-1}}$$

$$C_k = \frac{\partial h}{\partial x} \Big|_{\hat{x}_{k-1|k-1}}$$

$$M = \begin{bmatrix} R_f & 0 \\ P_f \cdot C^T & P_f \cdot A^T \\ 0 & Q_f \end{bmatrix}$$

$$HM = qr(M) = \begin{bmatrix} L & K \\ 0 & P_f \\ 0 & 0 \end{bmatrix}$$

$$G = K^T \cdot L^{-T}$$

11. Zeigegerät nach Anspruch 7, **dadurch gekennzeichnet, dass** die Korrektur des a priori geschätzten Zustands im Abtastschritt k des Kalman-Filters gemäß der folgenden Formel berechnet wird:

$$\hat{x}_k = \hat{x}_k^- + K_k \cdot \left( \begin{bmatrix} a_{X,k} \\ a_{Y,k} \\ a_{Z,k} \end{bmatrix} - \hat{y}_k^- \right)$$

12. Zeigegerät nach Anspruch 7, **dadurch gekennzeichnet, dass** die Komponenten $\omega_V$ und $\omega_W$ der Winkelgeschwin-

digkeit in dem Benutzerkoordinatensystem gemäß den folgenden Formeln berechnet werden:

$$\begin{cases} \tilde{\omega}_v = \cos\hat{\psi}.\omega_Y - \sin\hat{\psi}.\omega_Z \\ \omega_w = -\sin\hat{\theta}.\omega_X + \cos\hat{\theta}.\sin\hat{\psi}.\omega_Y + \cos\hat{\theta}.\cos\hat{\psi}.\omega_Z \end{cases}$$

**13.** Zeigegerät nach Anspruch 7, **dadurch gekennzeichnet, dass** das Kalman-Filter wenigstens eine der folgenden Bedingungen erfüllt: die dem Anfangswert des Zustands ($x_0$) zugeordnete Konfidenzmatrix $P_0$ gewählte Werte der Größenordnung von $10^{-2}$ umfasst; die seinem Zustandsmodell zugeordnete Konfidenzmatrix Q gewählte Werte umfasst, von denen die höchsten geringfügig höher sind als die Standardabweichung des Rauschens der Messungen des ersten Sensors; die dem Messwertmodell des Kalman-Filters zugeordnete Konfidenzmatrix R gewählte Werte umfasst, von denen die höchsten geringfügig höher sind als die Standardabweichung des Rauschens der Messungen des zweiten Sensors.

**14.** Zeigegerät nach Anspruch 6, **dadurch gekennzeichnet, dass** das Kalman-Filter wenigstens eine der folgenden Bedingungen erfüllt: sein Zustandsvektor (x) ist ein Quaternion der Form [cos $\alpha/2$, sin $\alpha/2$ $u_1$, sin $\alpha/2$ $u_2$, $\alpha/2$ $u_3$]; sein Zustandsmodell hat die folgende Form:

$$\dot{q} = \frac{1}{2}.\begin{vmatrix} q_0 \\ q_1 \\ q_2 \\ q_3 \end{vmatrix} \otimes \begin{vmatrix} 0 \\ \omega_X \\ \omega_Y \\ \omega_Z \end{vmatrix} ;$$

sein Messwertvektor umfasst wenigstens die Ausgänge des zweiten Sensors ($a_X$, $a_Y$, $a_Z$).

**15.** Zeigegerät nach Anspruch 14, **dadurch gekennzeichnet, dass** die Komponenten $\omega_V$ und $\omega_W$ der Winkelgeschwindigkeit in dem Referenzsystem des Benutzers gemäß der folgenden Formel berechnet werden:

$$\begin{pmatrix} 0 \\ \omega_u \\ \omega_v \\ \omega_w \end{pmatrix} = q \otimes \begin{pmatrix} 0 \\ \omega_X \\ \omega_Y \\ \omega_Z \end{pmatrix} \otimes \overline{q}$$

**16.** Zeigegerät nach Anspruch 6, **dadurch gekennzeichnet, dass** das Kalman-Filter wenigstens eine der folgenden Bedingungen erfüllt: sein Zustandsvektor (x) hat die Form [a, b, c, d] = [sin $\theta$, cos $\theta$, sin $\psi$, cos $\psi$]; sein Zustandsmodell hat die folgende Form:

$$\dot{x} = \begin{bmatrix} \dot{a} \\ \dot{b} \\ \dot{c} \\ \dot{d} \end{bmatrix} = \begin{bmatrix} 0 & -1 & 0 & 0 \\ 1 & 0 & 0 & 0 \\ 0 & 0 & 0 & -1 \\ 0 & 0 & 1 & 0 \end{bmatrix} \begin{bmatrix} a \\ b \\ c \\ d \end{bmatrix} ;$$

sein Messmodell hat die folgende Form:

$$y = \begin{bmatrix} a_X \\ a_Y \\ a_Z \end{bmatrix} = \begin{bmatrix} -a \\ b.c \\ b.d \end{bmatrix}$$

17. Zeigegerät nach Anspruch 16, **dadurch gekennzeichnet, dass** die Komponenten $\omega_V$ und $\omega_W$ der Winkelgeschwindigkeit in dem Referenzsystem des Benutzers gemäß den folgenden Formeln berechnet werden:

$$\begin{cases} \tilde{\omega}_v = d.\omega_Y - c.\omega_Z \\ \omega_w = -a.\omega_X + b.c.\omega_Y + b.d.\omega_Z \end{cases}$$

18. Zeigegerät nach Anspruch 5, **dadurch gekennzeichnet, dass** der Zustandsvektor (x) des Kalman-Filters die Form $[\theta, \psi, \omega_u, \omega_v, \omega_w]$ hat, und dadurch, dass sein Messwertvektor die Form $[a_x, a_y, a_z, \omega_x, \omega_y, \omega_z]$ hat.

19. Zeigegerät nach Anspruch 16, **dadurch gekennzeichnet, dass** das Zustandsmodell des Kalman-Filters die folgende Formel hat:

$$\begin{cases} \dot{\theta} = \alpha.\sqrt{\omega_v^2 + \omega_w^2} \\ \dot{\psi} = \omega_u \\ \dot{\omega}_u = -\dfrac{1}{\tau}.\omega_u \\ \dot{\omega}_v = -\dfrac{1}{\tau}.\omega_v \\ \dot{\omega}_w = -\dfrac{1}{\tau}.\omega_w \end{cases}$$

wobei $\tau$ die Zeitkonstante des Evolutionsmodells der Winkelgeschwindigkeit ist, und dadurch, dass das Messwertmodell eine der folgenden Formeln hat:

$$\begin{cases} a_X = -\sin\theta.\cos\psi \\ a_Y = -\sin\psi \\ a_Z = \cos\theta.\cos\psi \\ \omega_Y = \sin\theta.\sin\psi.\omega_u + \cos\psi.\omega_v + \cos\theta.\sin\psi.\omega_w \\ \omega_Z = \sin\theta.\cos\psi.\omega_u - \sin\psi.\omega_v + \cos\theta.\cos\psi.\omega_w \end{cases}$$

oder

$$\begin{cases} a_X = -\sin\theta.\cos\psi \\ a_Y = -\sin\psi \\ a_Z = \cos\theta.\cos\psi \\ \omega_X = \cos\theta.\omega_u - \sin\theta.\omega_w \\ \omega_Y = \sin\theta.\sin\psi.\omega_u + \cos\psi.\omega_v + \cos\theta.\sin\psi.\omega_w \\ \omega_Z = \sin\theta.\cos\psi.\omega_u - \sin\psi.\omega_v + \cos\theta.\cos\psi.\omega_w \end{cases}$$

20. Zeigegerät nach Anspruch 1, **dadurch gekennzeichnet, dass** der Zusammenführungsalgorithmus ein optimales Auflösungsverfahren implementiert.

**21.** Zeigegerät nach Anspruch 20, **dadurch gekennzeichnet, dass** das optimale Auflösungsverfahren eine Optimierung mit der folgenden Funktion als Kriterium ist:

$$f = \sum_{i=1}^{n} (\text{Messwerte}_{\text{Sensoren}} - \text{Messwerte}_{\text{geschätzt}})^{\text{T}} . (\text{Messwerte}_{\text{Sensoren}} - \text{Messwerte}_{\text{geschätzt}})$$

wobei ein Paar Vektoren (Messwerte$_{\text{sensoren}}$, Messweite$_{\text{geschätzt}}$) aus der folgenden Gruppe ausgewählt wird:

$$(\text{Messwerte}_{\text{Sensoren}} = \begin{bmatrix} a_X \\ a_Y \\ a_Z \\ 0 \; ou \; \omega_X \\ \omega_Y \\ \omega_Z \end{bmatrix},$$

$$(\text{Messwerte}_{\text{geschätzt}} = \begin{bmatrix} -\sin\theta \\ \cos\theta.\sin\psi \\ \cos\theta.\cos\psi \\ \cos\theta.\omega_u - \sin\theta.\omega_w \\ \sin\theta.\sin\psi.\omega_u + \cos\psi.\omega_v + \cos\theta.\sin\psi.\omega_w \\ \sin\theta.\cos\psi.\omega_u - \sin\psi.\omega_v + \cos\theta.\cos\psi.\omega_w \end{bmatrix}),$$

$$(\text{Messwerte}_{\text{Sensoren}} = \begin{bmatrix} a_X \\ a_Y \\ a_Z \end{bmatrix}, \quad \text{Messwerte}_{\text{geschätzt}} = \begin{bmatrix} -\sin\theta \\ \cos\theta.\sin\psi \\ \cos\theta.\cos\psi \end{bmatrix})$$

**Claims**

1. A pointing device (10) for use by a user on a movable element on a flat surface, said device comprising at least a first sensor (20) for measuring the angular speeds ($\omega_Y$, $\omega_Z$) of said device about at least two of its orthogonal axes (Y, Z), at least a second sensor (30) for measuring the linear displacements of said device along said two axes (Y, Z) and a third orthogonal axis (X), a module (40) for computing displacements (y, z) to be imposed on said movable element on said flat surface as a function of the displacements of said pointing device in space, said computation module comprising a sub-module (50) for compensating a tilt imposed on said pointing device by implementing a data merging algorithm, said algorithm using an observer or an optimisation criterion, said pointing device being **characterised in that** said data merging algorithm is configured to: i) receive as input at least measurements from said first angular speed sensor ($\omega_Y$, $\omega_Z$) and measurements from said second linear acceleration sensor along said three axes ($a_x$, $a_y$, $a_z$); ii) estimate, based on said measurements, a state vector comprising variables representing pitch ($\theta$) and roll ($\psi$) tilt angles imparted on said device, and supply at least angular speeds ($\omega_v$, $\omega_w$) of said device representing displacements (y, z) of said movable element in a user reference system linked to said user.

2. The pointing device according to claim 1, **characterised in that** said state vector further comprises the angular speeds ($\omega_v$, $\omega_w$) in said user reference system.

3. The pointing device according to claim 1, **characterised in that** said first sensor is a dual-axis gyrometer.

4. The pointing device according to claim 1, **characterised in that** said first sensor is a triple-axis gyrometer.

5. The pointing device according to claim 1, **characterised in that** said second sensor is a triple-axis accelerometer producing the outputs $a_x$, $a_y$, $a_z$.

6. The pointing device according to claim 1, **characterised in that** said data merging algorithm implements an extended Kalman filter.

7. The pointing device according to claim 6, **characterised in that** said Kalman filter fulfils at least one of the following conditions: its state vector (x) comprises at least one tilt angle ($\theta$, $\psi$) of said pointing device, its state model comprises at least an expression of the angular speed ($\omega$) of said pointing device as a function of at least one of said tilt angles ($\theta$, $\psi$), its measurements vector comprises at least the outputs of said second sensor ($a_x$, $a_y$, $a_z$).

8. The pointing device according to claim 7, **characterised in that** said state vector of said Kalman filter is initialised at an a priori selected state ($\theta_0$, $\psi_0$) and **in that** the a priori estimate of said state vector $\left( \hat{x}_k^- \right)$ in the Kalman filter sampling step k is computed according to the following formula: $\hat{x}_k^- = \begin{pmatrix} \hat{\theta}_k^- \\ \hat{\psi}_k^- \end{pmatrix} = \begin{pmatrix} \hat{\theta}_{k-1} \\ \hat{\psi}_{k-1} \end{pmatrix} + T_e \cdot \begin{pmatrix} \alpha \cdot \sqrt{\omega_Y^2 + \omega_Z^2} \\ \omega_x \end{pmatrix}$,

where $T_e$ is the sampling period of said filter.

9. The pointing device according to claim 7, **characterised in that** the a priori estimate of the measurements $\left( \hat{y}_k^- \right)$ in the Kalman filter sampling step k is computed according to the following formula:

$$\hat{y}_k^- = \begin{vmatrix} -\sin \hat{\theta}_k^- \\ \cos \hat{\theta}_k^- \cdot \sin \hat{\psi}_k^- \\ \cos \hat{\theta}_k^- \cdot \cos \hat{\psi}_k^- \end{vmatrix}$$

10. The pointing device according to claim 7, **characterised in that** the gain G of said Kalman filter is computed according to the following formulae:

$$A_k = \frac{\partial f}{\partial x}\Big|_{\hat{x}_{k-1|k-1}}$$

$$C_k = \frac{\partial h}{\partial x}\Big|_{\hat{x}_{k-1|k-1}}$$

$$M = \begin{bmatrix} R_f & 0 \\ P_f \cdot C^T & P_f \cdot A^T \\ 0 & Q_f \end{bmatrix}$$

$$HM = qr(M) = \begin{bmatrix} L & K \\ 0 & P_f \\ 0 & 0 \end{bmatrix}$$

$$G = K^T \cdot L^{-T}$$

11. The pointing device according to claim 7, **characterised in that** the correction of the a priori estimated state in the Kalman filter sampling step k is computed according to the following formula:

$$\hat{x}_k = \hat{x}_k^- + K_k \cdot \left( \begin{bmatrix} a_{X,k} \\ a_{Y,k} \\ a_{Z,k} \end{bmatrix} - \hat{y}_k^- \right)$$

12. The pointing device according to claim 7, **characterised in that** the components $\omega_V$ and $\omega_W$ of the angular speed in the user reference system are computed according to the following formulae:

$$\begin{cases} \omega_v = \cos\hat{\psi}.\omega_Y - \sin\hat{\psi}.\omega_Z \\ \omega_w = -\sin\hat{\theta}.\omega_X + \cos\hat{\theta}.\sin\hat{\psi}.\omega_Y + \cos\hat{\theta}.\cos\hat{\psi}.\omega_Z \end{cases}$$

13. The pointing device according to claim 7, **characterised in that** said Kalman filter fulfils at least one of the following conditions: the confidence matrix $P_0$ assigned to the initial value of the state ($x_0$) comprises selected values of approximately $10^{-2}$, the confidence matrix Q assigned to its state model comprises selected values, the highest of which are slightly higher than the standard deviation of the noise of the measurements of said first sensor, the confidence matrix R assigned to the measurements model of said Kalman filter comprises selected values, the highest of which are slightly higher than the standard deviation of the noise of the measurements of said second sensor.

14. The pointing device according to claim 6, **characterised in that** said Kalman filter fulfils at least one of the following conditions: its state vector (x) is a quaternion of the form [cos $\alpha$/2, sin $\alpha$/2 $u_1$, sin $\alpha$/2 $u_2$, $\alpha$/2 $u_3$]; its state model has the following form:

$$\dot{q} = \frac{1}{2} \cdot \begin{vmatrix} q_0 \\ q_1 \\ q_2 \\ q_3 \end{vmatrix} \otimes \begin{vmatrix} 0 \\ \omega_X \\ \omega_Y \\ \omega_Z \end{vmatrix} \quad ;$$

its measurement vector comprises at least the outputs of said second sensor ($a_X$, $a_Y$, $a_Z$).

15. The pointing device according to claim 14, **characterised in that** said components $\omega_V$ and $\omega_W$ of the angular speed in the reference system of said user are computed according to the following formula:

$$\begin{pmatrix} 0 \\ \omega_u \\ \omega_v \\ \omega_w \end{pmatrix} = q \otimes \begin{pmatrix} 0 \\ \omega_X \\ \omega_Y \\ \omega_Z \end{pmatrix} \otimes \overline{q}$$

16. The pointing device according to claim 6, **characterised in that** said Kalman filter fulfils at least one of the following conditions: its state vector (x) has the form [a, b, c, d] = [sin$\theta$, cos $\theta$, sin $\psi$, cos $\psi$], its state model has the following form:

$$\dot{x} = \begin{bmatrix} \dot{a} \\ \dot{b} \\ \dot{c} \\ \dot{d} \end{bmatrix} = \begin{bmatrix} 0 & -1 & 0 & 0 \\ 1 & 0 & 0 & 0 \\ 0 & 0 & 0 & -1 \\ 0 & 0 & 1 & 0 \end{bmatrix} \cdot \begin{bmatrix} a \\ b \\ c \\ d \end{bmatrix};$$

its measurements model has the following form:

$$y = \begin{bmatrix} a_X \\ a_Y \\ a_Z \end{bmatrix} = \begin{bmatrix} -a \\ b.c \\ b.d \end{bmatrix}$$

**17.** The pointing device according to claim 16, **characterised in that** said components $\omega_V$ and $\omega_W$ of the angular speed in the reference system of said user are computed according to the following formulae:

$$\begin{cases} \omega_v = d.\omega_Y - c.\omega_Z \\ \omega_w = -a.\omega_X + b.c.\omega_Y + b.d.\omega_Z \end{cases}$$

**18.** The pointing device according to claim 5, **characterised in that** said state vector (x) of said Kalman filter has the form $[\theta, \psi, \omega_u, \omega_v, \omega_w]$ and **in that** its measurements vector has the form $[a_x, a_y, a_z, \omega_x, \omega_y, \omega_z]$.

**19.** The pointing device according to claim 16, **characterised in that** the state model of said Kalman filter has the following form:

$$\begin{cases} \dot{\theta} = \alpha.\sqrt{\omega_v^2 + \omega_w^2} \\ \dot{\psi} = \omega_u \\ \dot{\omega}_u = -\dfrac{1}{\tau}.\omega_u \\ \dot{\omega}_v = -\dfrac{1}{\tau}.\omega_v \\ \dot{\omega}_w = -\dfrac{1}{\tau}.\omega_w \end{cases}$$

where $\tau$ is the time constant of the model of evolution of the angular speed and **in that** said measurements model has one of the following forms:

$$\begin{cases} a_X = -sin\,\theta.cos\,\psi \\ a_Y = -sin\,\psi \\ a_Z = cos\,\theta.cos\,\psi \\ \omega_Y = sin\,\theta.sin\,\psi.\omega_u + cos\,\psi.\omega_v + cos\,\theta.sin\,\psi.\omega_w \\ \omega_Z = sin\,\theta.cos\,\psi.\omega_u - sin\,\psi.\omega_v + cos\,\theta.cos\,\psi.\omega_w \end{cases}$$

or

$$\begin{cases} a_X = -\sin\theta.\cos\psi \\ a_Y = -\sin\psi \\ a_Z = \cos\theta.\cos\psi \\ \omega_X = \cos\theta.\omega_u - \sin\theta.\omega_w \\ \omega_Y = \sin\theta.\sin\psi.\omega_u + \cos\psi.\omega_v + \cos\theta.\sin\psi.\omega_w \\ \omega_Z = \sin\theta.\cos\psi.\omega_u - \sin\psi.\omega_v + \cos\theta.\cos\psi.\omega_w \end{cases}$$

20. The pointing device according to claim 1, **characterised in that** said merging algorithm implements an optimal resolution method.

21. The pointing device according to claim 20, **characterised in that** said optimal resolution method is an optimisation having the following function as a criterion:

$$f = \sum_{i=1}^{n} (\text{measurements}_{\text{sensors}} - \text{measurements}_{\text{estimated}})^{\text{T}}.(\text{measurements}_{\text{sensors}} - \text{measurements}_{\text{estimated}})$$

with a pair of vectors ($\text{measurements}_{\text{sensors}}$, $\text{measurements}_{\text{estimated}}$) being selected from the following group:

$$(\text{measurements}_{\text{sensors}} = \begin{bmatrix} a_X \\ a_Y \\ a_Z \\ 0 \ ou \ \omega_X \\ \omega_Y \\ \omega_Z \end{bmatrix},$$

$$(\text{measurements}_{\text{estimated}} = \begin{bmatrix} -\sin\theta \\ \cos\theta.\sin\psi \\ \cos\theta.\cos\psi \\ \cos\theta.\omega_u - \sin\theta.\omega_w \\ \sin\theta.\sin\psi.\omega_u + \cos\psi.\omega_v + \cos\theta.\sin\psi.\omega_w \\ \sin\theta.\cos\psi.\omega_u - \sin\psi.\omega_v + \cos\theta.\cos\psi.\omega_w \end{bmatrix}),$$

$$(\text{measurements}_{\text{sensors}} = \begin{bmatrix} a_X \\ a_Y \\ a_Z \end{bmatrix}, \ \text{measurements}_{\text{estimated}} = \begin{bmatrix} -\sin\theta \\ \cos\theta.\sin\psi \\ \cos\theta.\cos\psi \end{bmatrix}).$$

40
Module de
calcul

70
Transmission

10
Pointeur

50

SOUS-MODULE
DE
COMPENSATION

20

CAPTEUR DE
VITESSES
ANGULAIRES

30

CAPTEUR
D' ACCELE-
RATIONS
LINEAIRES

60
Piles

FIG.1

FIG.2

1 rotation : lacet $\varphi$

2 rotations : tangage $\theta$, roulis $\Psi$

repère écran
(x,y,z)

repère du porteur
(u,v,w)

repère du dispositif
(X,Y,Z)

3 rotations : lacet, tangage, roulis

FIG.3

## FIG.4

## FIG.5

## FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5453758 A
- US 5440326 A
- US 5902968 A
- US 20040075650 A
- US 20020140745 A
- US 7158118 B
- EP 1870670 A
- EP 1441279 A
- US 20070257885 A1

**Littérature non-brevet citée dans la description**

- *Transactions of the ASME - Journal of Basic Engineering,* 1960, vol. 82, 35-45
- **WELCH G. ; BISHOP G.** An introduction to the Kalman Filter. *SIGGRAPH,* 2001